# EUROPEAN PATENT APPLICATION

(11) **EP 4 534 273 A1**
(43) Date of publication of application: **09.04.2025**
(21) Application number: 22744235.7
(22) Date of filing: 27.05.2022
(51) Int. Cl.: B29C 49/50, B29C 51/08, B29C 51/26, B29C 51/42, B29C 70/46, B29C 51/12, B29K 705/00, B29L 31/30, B29K 23/00, B29K 701/10, B29K 105/12, B29K 105/08

(54) **PROCESSES FOR MANUFACTURING LOAD-BEARING STRUCTURES FOR VEHICLE DOORS**

(71) Applicant: Inertim Research S.L., 09004 Burgos (ES)
(72) Inventor: MARTÍNEZ MORAL, Francisco Javier, 09002 BURGOS (ES)
(74) Representative: Herrero & Asociados, S.L.
(86) International application number: PCT/ES2022/070327
(87) International publication number: WO 2023/227803

(57) **Abstract**

Process (1000) for manufacturing a load-bearing structure (100) for tailgates (200) of vehicles by thermoforming, the process comprises obtaining a thermoforming press comprising a male mold (1050a) and a female mold (1050b), wherein the male mold and the female mold (1050a, 1050b) comprise variable maximum distances between the male mold and the female mold, heat (1200) a sheet of thermoplastic material (1010) with dimensions equivalent to the load-bearing structure (100) for tailgates of vehicles, cooling down the male mold and the female mold, placing the sheet of thermoplastic material (1010) between the male mold and the female mold (1050a, 1050b), adjusting (1300, 1400) the male mold and the mold female (1050a, 1050b) causing the pressing of the sheet of thermoplastic material (1010) to obtain the load-bearing structure (100) and dimensionally stabilize (1500) the load-bearing structure (100).

## Description

### Object of the invention

The object of the present invention relates to processes for manufacturing load-bearing structures for vehicle doors and tailgate for automobiles that include said load-bearing structures.

The load-bearing structures are obtained from thermoplastic material through the thermoforming process.

### Background of the invention

Door openers or tailgates of an automobile are constantly evolving to achieve lower costs and weights. Traditionally, these are made of steel or aluminum, the latter seeking to lighten weight.

Developments in compression molding process (CMS) and fiberglass reinforced thermoplastics (GMT) or in injected thermoplastics with which weight savings are achieved are known, although high costs of thermosetting technologies or limitations in the dimensions of the injection molds, as well as the costs and investments associated with the technology of injection of large parts, make that these technologies are not yet the majority in the manufacture of large load-bearing structures in the automotive sector.

The present invention solves the drawbacks of the existing manufacturing processes for obtaining load-bearing structures applicable to automobile tailgates.

### Description of the invention

The present invention relates to manufacturing processes for load-bearing structures for an automobile door opener, in particular for an automobile tailgate. In other aspects, the present invention relates to the load-bearing structures obtained through said manufacturing processes, and to an automobile tailgate comprising said load-bearing structure.

In a preferred embodiment, the structure comprises a tailgate made of thermoplastic material with a high content of structural fibers, glass, carbon, Kevlar or the like. The manufacturing process according to the present invention uses thermoforming technology.

In addition, one of the greatest advantages of the present invention is the possibility of making the load-bearing structure in a thermoforming press that can have large dimensions, being a differential advantage compared to injection processes given the current limitation of the size of the injectors, in addition to its enormous cost, which often forces the injection process to be divided into two or more pieces that have to be assembled later, which also adds extra cost and complexity.

In the present invention, the use of various materials is proposed by means of the thermoforming and thermoplastic process, such as short-fiber, long-fiber polypropylene sheets or materials formed by layers or continuous fiber fabrics embedded in a thermoplastic substrate, among others.

In a particular embodiment, the manufacturing process comprises the introduction in the gate of an internal metallic substructure formed by profiles and/or tubes by means of joining means to increase the rigidity of the gate and allow the structural load of the thermoformable plastic to be reduced.

Another advantage obtained with the manufacturing process according to the present invention is that of using the surplus material found in the opening of the gate where the glass of the gate will later be installed. Thus, the manufacturing process makes it possible to take advantage of this surplus thermoformed material from the opening of the gate for the generation of auxiliary parts that, after a trimming step, can form part of the assembly, such as reinforcements or structural supports.

In another aspect according to the present invention and in order to facilitate demolding or other technical interests, it is possible to divide the structure or gate into two upper and lower parts. In this case, the manufacturing process according to the present invention proposes in an innovative way to create a central overlap between both upper and lower parts that makes it possible to give rigidity to the resulting assembly, as well as to house elements such as the windshield wiper motor or other elements.

Lastly, a design is included as a possibility of this invention that, including the visible part of the interior, does not make it necessary to install supplementary upholstery, converting the structural part into a visible part for the passengers of the vehicle.

Thus, the manufacturing process allows obtaining a structural support, which can be visible from inside the vehicle and on which other elements such as glass, exterior skin, locks, windshield wipers, wiring, shock absorbers, etc. are installed.

The use of thermoforming of thermosetting plastics in the industry is widespread given its high rigidity features, but thermoforming of thermoplastics in large parts is not common given the high complexity that this type of part implies. The present invention solves this complexity through the manufacturing process described below:
In a first aspect, the present invention relates to a process for manufacturing a load-bearing structure for tailgates of vehicles by means of thermoforming. The process comprises heating a sheet of thermoplastic material with dimensions equivalent to the load-bearing structure for tailgates of vehicles to a temperature between [200, 400] °C, obtaining a male mold and a female mold. The dimensions of said sheet of thermoplastic material are calculated based on the dimensions of the load-bearing structure and its flat development, introducing the elongation of the thermoplastic material in specific areas and adding an oversize for its correct positioning and fixing on the molds.

The male mold and the female mold comprise, in the pressing step, variable maximum distances between the male mold and the female mold. The process also includes calculating a maximum distance d1 between the male mold and the female mold, wherein d1 is equivalent to the thickness of the load-bearing structure in flat areas of the load-bearing structure, calculating a maximum distance d2 between the male mold and the female mold, wherein d2 is the thickness of the load-bearing structure in curvilinear areas of the load-bearing structure, and wherein d2 is less than d1 in one or more areas of the load-bearing structure. The process also comprises cooling down the male mold and the female mold between [30, 50] °C, placing the sheet of thermoplastic material between the male mold and the female mold, actuating the male mold and the female mold causing the pressing of the sheet of thermoplastic material at a temperature between [180, 210] °C to obtain the load-bearing structure, wherein the flat and curvilinear areas of the load-bearing structure are equivalent to d1 and d2 with pressures between [50, 100] Kg/cm2, and to dimensionally stabilize the load-bearing structure.

In one example, the process further comprises introducing an internal metal substructure made up of profiles and/or tubes in the load-bearing structure by means of joining means

In a first example, the manufacturing process also comprises obtaining an opening configured for housing a tailgate glass during the pressing or press actuating step, and generating a piece of additional thermoplastic material by obtaining said opening. In addition, the process comprises obtaining auxiliary elements of the tailgate structure by thermoforming, using said piece of additional thermoplastic material.

In a second example, the manufacturing process also comprises obtaining an opening configured for housing a tailgate glass during a cutting step subsequent to the pressing or press actuation step, and generating a piece of additional thermoplastic material by obtaining said opening. In addition, the process comprises obtaining auxiliary elements of the tailgate structure by thermoforming, using said piece of additional thermoplastic material.

In a second aspect, the invention relates to a load-bearing structure for tailgates of vehicles obtained through the manufacturing process according to the first aspect of the invention.

The present invention also relates to the use of the load-bearing structure as interior upholstery of a tailgate of a vehicle.

In a third aspect, the present invention relates to a second manufacturing process of a load-bearing structure for tailgates of vehicles by means of thermoforming, wherein the load-bearing structure comprises an upper substructure and a lower substructure. The process comprises heating to a temperature between [200, 400] °C a first sheet of thermoplastic material with dimensions equivalent to the upper substructure of the load-bearing structure, heating to a temperature between [200, 400] °C a second sheet of material thermoplastic with dimensions equivalent to the lower substructure of the load-bearing structure.

The process comprises obtaining a male mold and a female mold for each of the sheets, wherein the male mold and the female mold comprise variable maximum distances between the male mold and the female mold in the pressing step, calculating at least one maximum distance d1 between the male mold and the female mold, wherein d1 is equivalent to the thickness of flat areas in each of the substructures, calculating at least one maximum distance d2 between the male mold and the female mold, wherein d2 is equivalent to the thickness of curvilinear areas in each of the substructures, and wherein d2 is less than d1 in one or more areas of the load-bearing structure.

The process also comprises cooling down the male and female molds at a temperature between [30, 50] °C, placing each sheet of thermoplastic material between the male mold and the respective female mold, and actuating said molds causing the pressing of the sheets of thermoplastic material at a temperature between [180, 210] °C to obtain the substructures. Wherein flat and curvilinear areas of the substructures are equivalent to d1 and d2 with pressures between [50, 100] Kg/cm2. The process further comprises dimensionally stabilizing the substructures.

Finally, the process includes the step of assembling the upper substructure and the lower substructure to obtain the load-bearing structure.

In one example, the process further comprises introducing an internal metallic substructure made up of profiles and/or tubes to the load-bearing structure by means of joining means.

In a first example, the process also comprises obtaining an opening configured for housing a tailgate glass during the pressing step, wherein said obtaining generates a piece of additional thermoplastic material, and obtaining auxiliary elements of the tailgate structure by thermoforming through the use of the piece of additional thermoplastic material.

In a second example, the process also comprises obtaining an opening configured for housing a tailgate glass during a cutting step subsequent to the pressing step, wherein said obtaining generates a piece of additional thermoplastic material, and obtaining auxiliary elements of the tailgate structure by thermoforming through the use of the piece of additional thermoplastic material.

In a fourth aspect, the invention relates to a load-bearing structure for tailgates of vehicles obtained through the manufacturing processes according to the present invention.

The present invention also relates to the use of the load-bearing structures according to the present invention as upholstery of a tailgate of a vehicle.

In a final aspect, the present invention relates to a tailgate comprising the load-bearing structures according to the present invention and one or more of the following elements: glass, plastic or metallic outer skin, motors and/or electronics.

### Description of the drawings

To complement the description that is being made and in order to help a better understanding of the features of the manufacturing processes in accordance with a preferred example of its practical embodiment, a set of drawings is attached as an integral part of said description, wherein, by way of illustration and not limitation, the following has been represented:
Figure 1 shows the manufacturing process according to the present invention.
Figure 2 shows the load-bearing structure obtained by the manufacturing process according to the present invention.
Figure 3 shows the load-bearing structure integrated as part of a vehicle tailgate.
Figure 4 shows a first exploded view of an example of a load-bearing structure obtained by the manufacturing process according to the present invention and wherein the load-bearing structure comprises an internal metallic substructure formed by profiles and/or tubes.
Figure 5 shows a second exploded view of the example of the load-bearing structure obtained by the manufacturing process according to the present invention and wherein the load-bearing structure comprises an internal metallic substructure formed by profiles and/or tubes.
Figure 6 shows the example of the load-bearing structure that comprises an internal metallic substructure formed by profiles and/or tubes.
Figure 7 shows a vehicle tailgate comprising a load-bearing structure obtained by the manufacturing process according to the present invention.

### Preferred embodiment of the invention

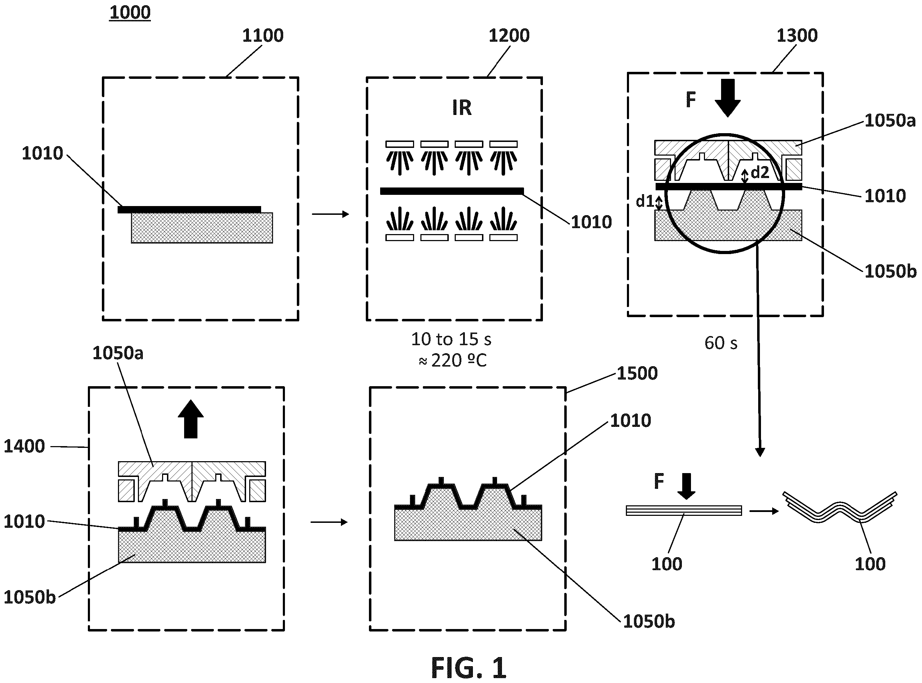

Figure 1 shows the manufacturing process (1000) of a load-bearing structure (100) for a vehicle tailgate (200) by thermoforming.

The manufacturing process (1000) comprises obtaining (1100) a sheet of thermoplastic material (1010) with dimensions equivalent to the load-bearing structure (100) for a tailgate (200) of a vehicle, as well as obtaining a thermoforming press that comprises a male mold (1050a) and a female mold (1050b), wherein the male mold and the female mold (1050a, 1050b) comprise variable maximum distances between the male mold and the female mold (1050a, 1050b).

To obtain said variable distances, the manufacturing process (1000) comprises calculating at least one maximum distance (d1) between the male mold (1050a) and the female mold (1050b), wherein (d1) is equivalent or proportional to the thickness of the load-bearing structure (100) in flat areas of the load-bearing structure (100) and calculating at least one maximum distance (d2) between the male mold (1050a) and the female mold (1050b), wherein d2 is the thickness of the load-bearing structure (100) in curvilinear areas of the load-bearing structure (100), wherein (d2) is less than (d1) in one or more areas of the load-bearing structure (100).

The manufacturing process (1000) comprises heating (1200) the sheet of thermoplastic material (1010) at a temperature between [200, 400] °C.

The manufacturing process (1000) comprises cooling down the male mold and the female mold (1050a, 1050b) at a temperature range between [30, 50] °C.

The manufacturing process (1000) comprises placing the sheet of thermoplastic material (1010) between the male mold and the female mold (1050a, 1050b) as shown in reference (1300).

The manufacturing process (1000) comprises actuating (1300, 1400) the male mold and the female mold causing the pressing of the sheet of thermoplastic material at a temperature range between [180, 210] °C and at a pressure range between [50, 100] Kg/cm2 to obtain the load-bearing structure (100), wherein the flat and curvilinear areas of the load-bearing structure are equivalent to d1 and d2.

Finally, the manufacturing process (1000) comprises dimensionally stabilizing (1500) the load-bearing structure (100).

The advantages of this manufacturing process (1000) are multiple:
The cost is much lower than other manufacturing processes that use injection or metal stamping, especially in large parts such as a tailgate of an automobile such as the one described in the present invention. Another advantage is the lower cost of thermoforming molds compared to injection molds.

In a particular example, the manufacturing process (1000) comprises the step of introducing an internal metallic substructure (160) formed by profiles and/or tubes in the load-bearing structure (100) by means of joining means.

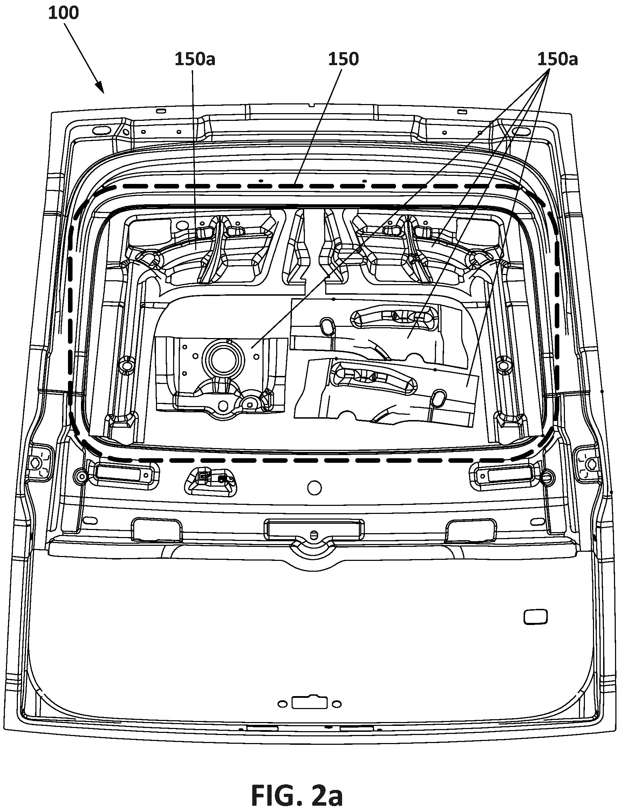

Figure 2a shows the load-bearing structure (100) obtained through the manufacturing process (1000).

In another example, the load-bearing structure (100) can be obtained by assembling an upper substructure and a lower substructure to obtain the load-bearing structure (100). The upper and lower substructure can also be obtained by the manufacturing process (1000) and assembled by joining means.

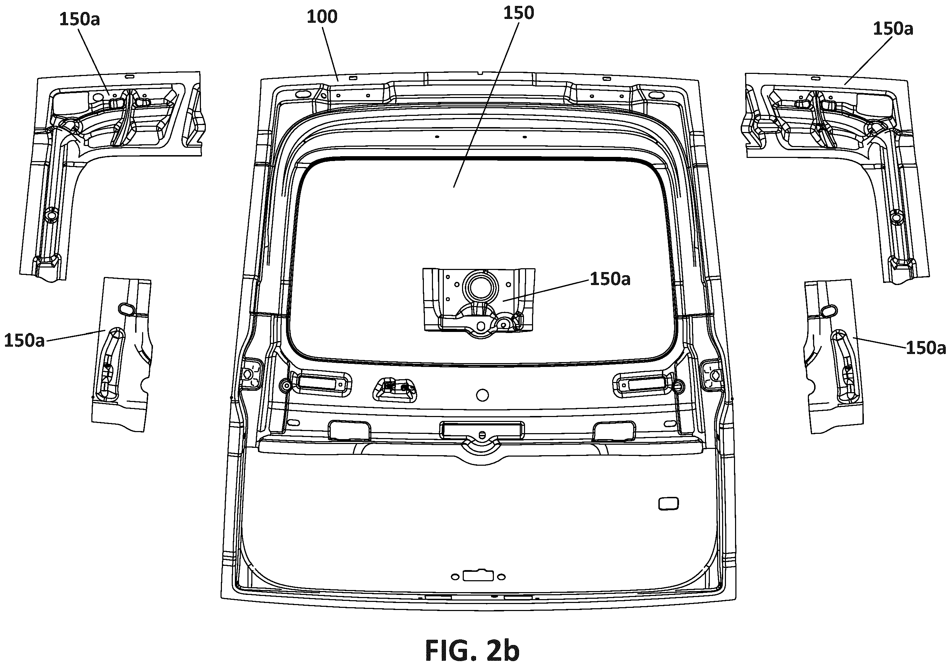

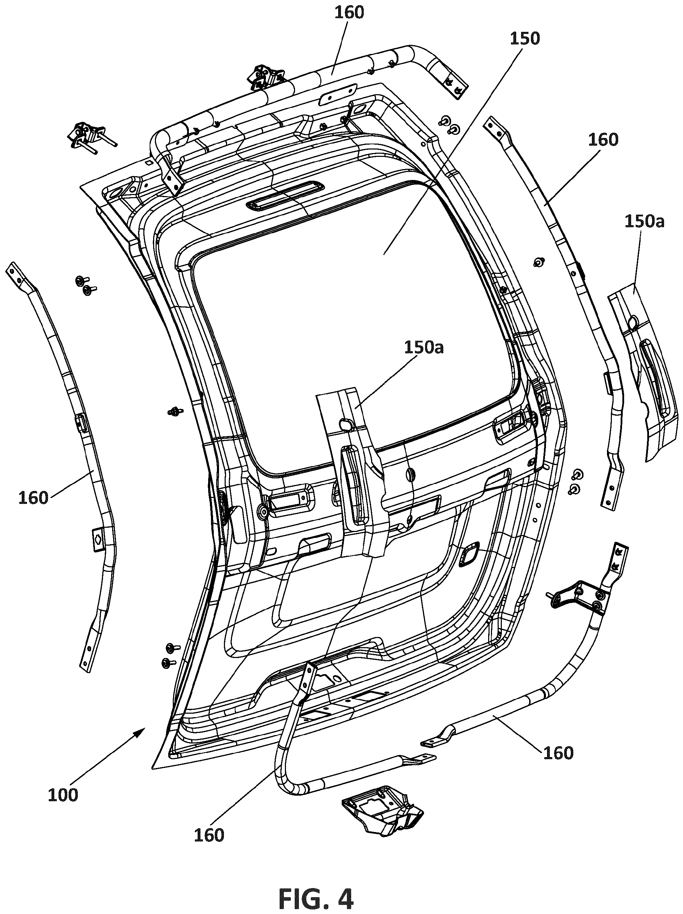

The load-bearing structure (100) may comprise an opening (150) obtained during the pressing step configured for housing a glass of the tailgate (200) (the tailgate (200) shown in Figure 4). From the additional or surplus thermoplastic material of said opening (150) a set of auxiliary elements (150a) of thermoplastic material can be obtained as shown in figure 2b. The set of auxiliary elements (150a) can be used as an integral part of the structure of the tailgate (200).

In another example, said opening (150) can be obtained during a cutting step subsequent to the pressing step.

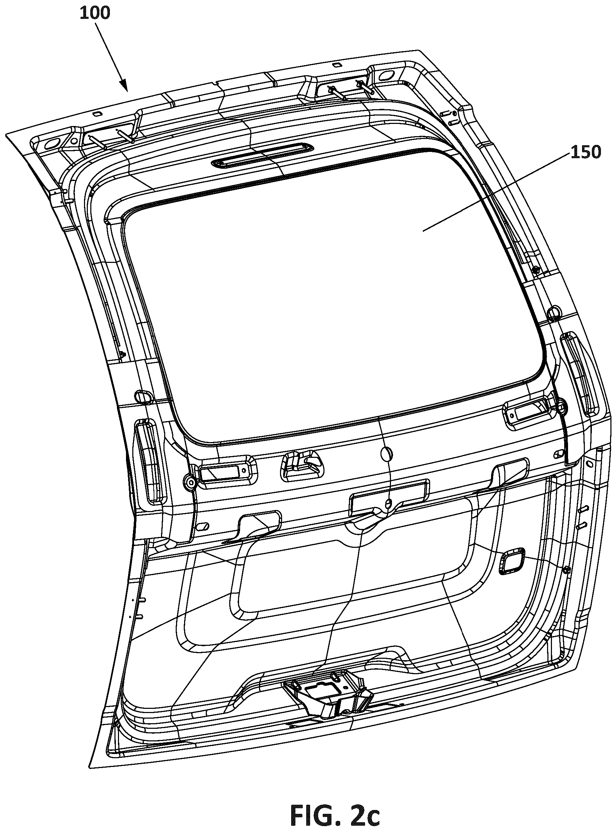

Figure 2c shows the load-bearing structure (100) obtained through the manufacturing process (1000) and wherein the opening (150) can be seen without the set of auxiliary elements (150a) obtained from the additional thermoplastic material.

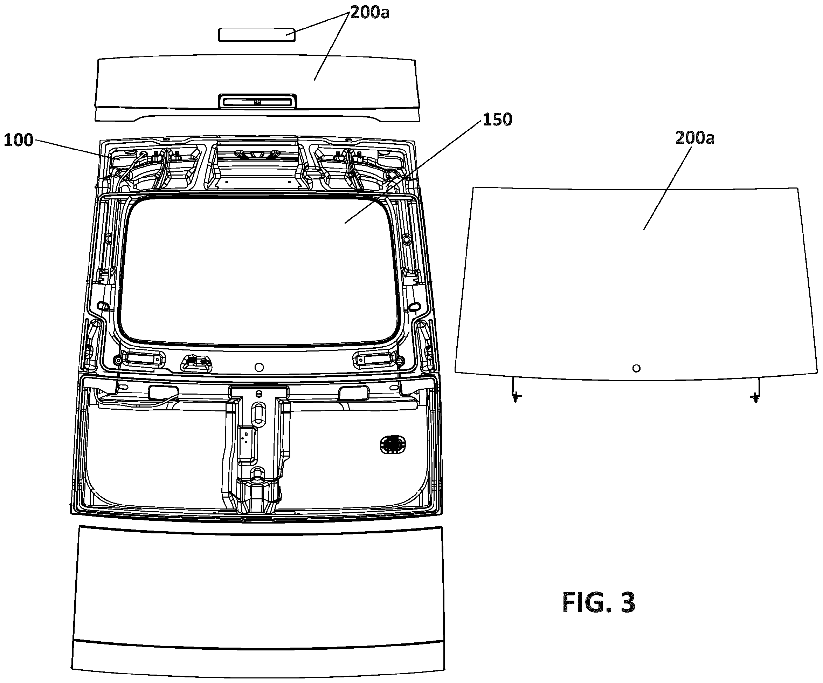

Figure 3 shows the integral parts of the tailgate (200) such as the load-bearing structure (100) and a set of parts (200a) such as glass, plastic or metallic outer skin, motors and/or electronics.

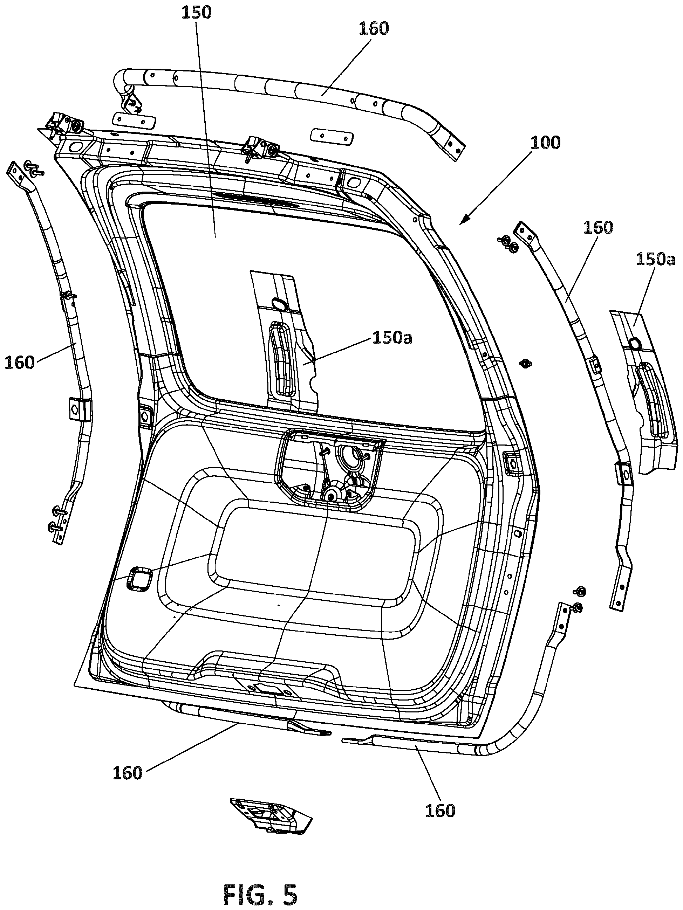

Figures 4 and 5 show two exploded views of another example of a load-bearing structure (100) obtained by the manufacturing process (1000) according to the present invention. The load-bearing structure (100) comprises the opening (150) and a set of auxiliary elements () obtained from the additional or surplus thermoplastic material of said opening (150). In addition, this example of load-bearing structure (100) comprises an internal metallic substructure (160) formed by profiles and/or tubes by means of joining means to increase the rigidity of the tailgate (200) and allow the structural load of the thermoformable plastic to be reduced.

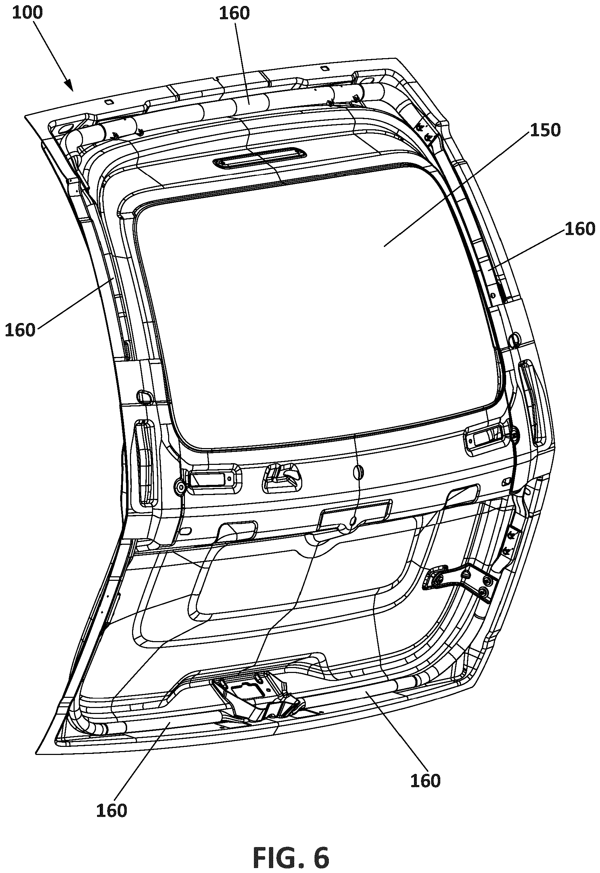

Figure 6 shows the example of the load-bearing structure (100) of Figures 4 and 5, which comprises the internal metal substructure (160) formed by profiles and/or tubes and joined to the load-bearing structure (100) by means of joining means.

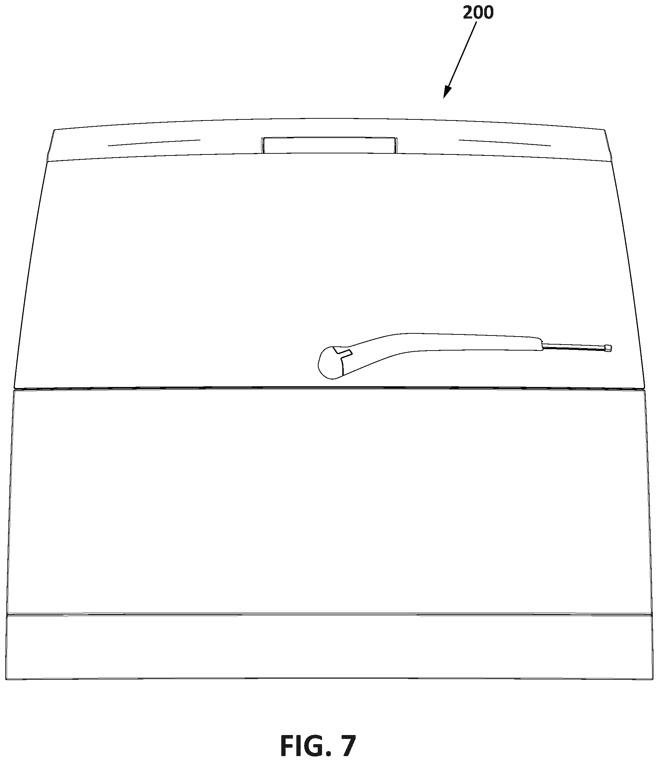

Figure 7 shows the tailgate (200) comprising the load-bearing structure (100) obtained by the manufacturing process (1000).

## Claims

1. Process (1000) for manufacturing a load-bearing structure (100) for a tailgate (200) of a vehicle by thermoforming, the process includes:
- obtaining a thermoforming press comprising a male mold (1050a) and a female mold (1050b), wherein the male mold and the female mold (1050a, 1050b) comprise variable maximum distances between the male mold and the female mold (1050a, 1050b);
- calculating at least one maximum distance (d1) between the male mold and the female mold (1050a, 1050b), wherein (d1) is equivalent to the thickness of the load-bearing structure (100) in flat areas of the load-bearing structure (100);
- calculating at least one maximum distance (d2) between the male mold and the female mold (1050a, 1050b), wherein (d2) is the thickness of the load-bearing structure (100) in curvilinear areas of the load-bearing structure (100), wherein (d2) is less than (d1) in one or more areas of the load-bearing structure (100);
- heating (1200) to a temperature between [200, 400] °C a sheet of thermoplastic material (1010) with dimensions equivalent to the load-bearing structure (100) for the tailgate (200) of the vehicle;
- cooling down the male mold and the female mold (1050a, 1050b) at a temperature between [30, 50] °C;
- placing the sheet of thermoplastic material (1010) between the male mold and the female mold (1050a, 1050b);
- actuating (1300, 1400) the male mold and the female mold (1050a, 1050b) causing the pressing of the sheet of thermoplastic material (1010) at a temperature between [180, 210] °C and with pressures between [50, 100] Kg/cm2 to obtain the load-bearing structure (100), wherein the flat and curvilinear areas of the load-bearing structure (100) are proportional to (d1) and (d2), and
- stabilizing (1500) dimensionally the load-bearing structure (100).

2. Process (1000) for manufacturing a load-bearing structure (100) for a tailgate (200) of a vehicle according to claim 1, which further comprises:
- inserting an internal metallic substructure (160) comprising profiles and/or tubes in the load-bearing structure (100) by means of joining means.

3. The process (1000) for manufacturing a load-bearing structure (100) for a tailgate (200) of a vehicle according to claims 1 or 2, which further comprises:
- obtaining an opening (150) configured for housing a glass of the tailgate (200) during the actuation step (1300, 1400), wherein obtaining said opening (150) generates a piece of additional thermoplastic material; or
- obtaining an opening (150) configured for housing a glass of the tailgate (200) during a cutting step subsequent to the actuation step (1300, 1400), wherein obtaining said opening (150) generates a piece of additional thermoplastic material; and
- obtaining auxiliary elements (150a) of the tailgate structure (200) by thermoforming from the piece of additional thermoplastic material.

4. Load-bearing structure (100) for a tailgate (200) of a vehicle obtained by the manufacturing process of claims 1 to 3.

5. Use of the load-bearing structure (100) according to claim 4 as an upholstery of a tailgate (200) of a vehicle.

6. Process (1000) for manufacturing a load-bearing structure (100) for a tailgate (200) of a vehicle by thermoforming, wherein the load-bearing structure (100) comprises an upper substructure and a lower substructure, the manufacturing process (1000) comprises for each of the substructures:
- obtaining a thermoforming press comprising a male mold (1050a) and a female mold (1050b), wherein the male mold and the female mold (1050a, 1050b) comprise variable maximum distances between the male mold and the female mold (1050a, 1050b);
- calculating at least one maximum distance (d1) between the male mold and the female mold (1050a, 1050b), wherein (d1) is equivalent to the thickness of the upper or lower substructure in flat areas of the upper or lower substructure;
- calculating at least one maximum distance (d2) between the male mold and the female mold (1050a, 1050b), wherein (d2) is the thickness of the load-bearing structure (100) in curvilinear areas of the upper or lower substructure structure, wherein (d2) is less than (d1) in one or more areas of the upper or lower substructure;
- heating (1200) to a temperature between [200, 400] °C a sheet of thermoplastic material (1010) with dimensions equivalent to the upper or lower substructure for the tailgate (200) of the vehicle;
- cooling down the male mold and the female mold (1050a, 1050b) at a temperature between [30, 50] °C;
- placing the sheet of thermoplastic material (1010) between the male mold and the female mold (1050a, 1050b);
- actuating (1300, 1400) the male mold and the female mold (1050a, 1050b) causing the pressing of the sheet of thermoplastic material (1010) at a temperature between [180, 210] °C and with pressures between [50, 100] Kg/cm2 to obtain the upper or lower substructure, wherein the flat and curvilinear areas of the upper or lower substructure are proportional to (d1) and (d2), and
- assembling the upper substructure and the lower substructure to obtain the load-bearing structure (100) by joining means.

7. Process (1000) for manufacturing a load-bearing structure (100) for a tailgate (200) of a vehicle according to claim 6, further comprising:
- introducing an internal metallic substructure (160) formed by profiles and/or tubes to the load-bearing structure (100) by means of joining means.

8. The process (1000) for manufacturing a load-bearing structure (100) for a tailgate (200) of a vehicle according to claims 6 or 7, which further comprises:
- obtaining an opening (150) configured for housing a glass of the tailgate (200) during the actuation step (1300, 1400), wherein obtaining said opening (150) generates a piece of additional thermoplastic material; or
- obtaining an opening (150) configured for housing a glass of the tailgate (200) during a cutting step subsequent to the actuating step (1300, 1400), wherein obtaining said opening (150) generates a piece of additional thermoplastic material; and
- obtaining auxiliary elements (150a) of the tailgate structure (200) by thermoforming from the piece of additional thermoplastic material.

9. Load-bearing structure (100) for a tailgate (200) of a vehicle obtained by the manufacturing process of claims 6 to 8.

10. Use of the load-bearing structure (100) according to claim 9 as an upholstery of a tailgate (200) of a vehicle.

11. Tailgate (200) for a vehicle comprising the load-bearing structure (100) according to claims 4 or 9.

12. Tailgate (200) for a vehicle according to claim 11, further comprising one or more of the following elements:
- glass or plastic glazing;
- plastic or metal outer skin;
- one or more motors;
- electronics;
- at least one lock;
- shock absorbers;
- windshield wiper;
- spoilers for aerodynamic improvement;
- lights;
- sensors;
- wiring; and/or
- components for improving the vibroacoustic properties of the tailgate (200).
